# EUROPÄISCHE PATENTSCHRIFT

(11) **EP 1 154 189 B1**
(45) Veröffentlichungstag und Bekanntmachung des Hinweises auf die Patenterteilung: **14.12.2005**
(21) Anmeldenummer: 01890144.7
(22) Anmeldetag: 11.05.2001
(51) Int. Cl.: F16L 33/207

(54) **Klemmvorrichtung zum Verbinden eines Hydraulikschlauches mit einer Schlaucharmatur**
Clamping device for connecting a hydraulic hose to a hose fitting
Dispositif de serrage pour la connexion d'un tuyau hydraulique à un embout

(30) Priorität: 12.05.2000 AT 8322000
(43) Veröffentlichungstag der Anmeldung: 14.11.2001
(73) Patentinhaber: Steyr-Werner Technischer Handel GmbH, 1180 Wien (AT)
(72) Erfinder: Sperlbauer, Heinz, Ing., 4452 Ternberg (AT)
(74) Vertreter: Hübscher, Helmut

(56) Entgegenhaltungen:
- US-A- 4 366 841
- US-A- 4 653 779

## Beschreibung

Die Erfindung bezieht sich auf eine Klemmvorrichtung zum Verbinden eines Hydraulikschlauches mit einer Schlaucharmatur, bestehend aus einem der Schlaucharmatur zugehörigen Nippel und aus einer eine Ringschulter des Nippels mit einem Anschlußende übergreifenden Fassungshülse, die im Bereich eines zylindrischen Abschnittes auf ihrer Innenwandung mit axialem Abstand voneinander angeordnete, im Querschnitt zahnartige Umfangsrippen aufweist und sich zumindest vor ihrer plastischen Verformung zwischen dem Anschlußende und dem zylindrischen Abschnitt gegen diesen Abschnitt hin konisch erweitert, wobei das auf den Nippel aufgeschobene Schlauchende zwischen dem Nippel und der unter einer plastischen Verformung radial zusammengedrückten Fassungshülse festklemmbar ist, während die Umfangsrippen, die im Sinne einer Auslenkung der sich im Querschnitt ergebenden Zähne an einer gegebenenfalls im Hydraulikschlauch vorgesehenen, metallischen Bewehrungseinlage biegeweich ausgebildet sind, in die Außenwandung des Hydraulikschlauches formschlüssig eingreifen.

Zum Anschluß einer Schlaucharmatur an einen Hydraulikschlauch wird das Schlauchende auf einen der Schlaucharmatur zugehörigen Nippel aufgeschoben und zwischen dem Nippel und einer den Nippel umschließenden Fassungshülse festgeklemmt, die mit der Hülse zugfest verbunden ist. Zu diesem Zweck übergreift die Fassungshülse eine Ringschulter des Nippels mit einem entsprechend ausgebildeten Anschlußende. Da auf der Innenwandung der Fassungshülse mit axialem Abstand voneinander angeordnete, im Querschnitt zahnartige Umfangsrippen ausgeformt sind, dringen diese zahnartigen Umfangsrippen beim radialen Zusammendrücken der Fassungshülse in die Außenwandung des Hydraulikschlauches ein, und zwar bis in den Bereich der metallischen Bewehrungseinlage des Hydraulikschlauches, so daß sich aufgrund der dabei ergebenden Verformung der Bewehrungseinlage ein Formschluß zwischen den Umfangsrippen der Fassungshülse und der Bewehrungseinlage des Hydraulikschlauches einstellt. Um die notwendige Klemmhalterung zwischen der radial zusammengedrückten Fassungshülse und dem Nippel zu erreichen, ist insbesondere die Fassungshülse der Klemmvorrichtung an den Aufbau des anzuklemmenden Hydraulikschlauches anzupassen, um beispielsweise die unterschiedlichen Einbettungsverhältnisse der ein- oder mehrlagigen Bewehrungseinlagen der Hydraulikschläuche und unterschiedliche Wanddicken berücksichtigen zu können. Dies bedeutet, daß für unterschiedliche Hydraulikschläuche unterschiedliche Schlaucharmaturen nur wegen der unterschiedlichen Klemmbedingungen bereitgestellt werden müssen. Um hier Erleichterungen zu schaffen, ist es bekannt (AU 540851 B), die Fassungshülse so auszubilden, daß sich ein konischer Übergang vom Anschlußende zu einem zylindrischen Abschnitt im Bereich der Umfangsrippen ergibt. Der konische Übergangsabschnitt vereinfacht das radiale Zusammendrücken der Fassungshülse beim Klemmvorgang, wobei eine axiale Verlagerung des zylindrischen Hülsenabschnittes mit dem Nachteil ergibt, daß durch diese Verlagerung das Eindringen der Umfangsrippen in die Bewehrungseinlage erschwert wird.

Schließlich ist es bekannt (US 4 366 841 A), die sich im Querschnitt der Umfangsrippen der Fassungshülse einer Klemmvorrichtung ergebenden Zähne mit einem abgeflachten Ende auszubilden, um vergleichsweise scharfe Ecken zu erhalten, die für die notwendige Abstützung der Umfangsrippen an der Bewehrungseinlage sorgen, wenn beim radialen Zusammendrücken der Fassungshülse diese Umfangsrippen in die Außenwandung des Hydraulikschlauches eindringen und dabei geringfügig gegen die Fassungshülse hin umgebogen werden. Die wegen der Forderung nach einer scharfkantigen Ausbildung eine vergleichsweise hohe Festigkeit aufweisenden, umlaufenden Ränder der Umfangsrippen bringen allerdings die Gefahr mit sich, daß die Bewehrungseinlage des Hydraulikschlauches verletzt und damit die zugfeste Verbindung zwischen der Fassungshülse und dem Hydraulikschlauch beeinträchtigt wird.

Der Erfindung liegt somit die Aufgabe zugrunde, eine Klemmvorrichtung zum Verbinden eines Hydraulikschlauches mit einer Schlaucharmatur der eingangs geschilderten Art so auszugestalten, daß unterschiedlich aufgebaute Hydraullkschläuche sicher geklemmt werden können.

Die Erfindung löst die gestellte Aufgabe dadurch, daß die Spitzen der im Querschnitt zahnförmigen Umfangsrippen an einer Bewehrungseinlage unter einer Kaltvarfestigung anstauchbar sind.

Da zufolge dieser Maßnahme die Spitzen der im Querschnitt zahnförmigen Umfangsrippen angestaucht werden, wenn sie beim radialen Zusammendrücken der Fassungshülse auf die härtere metallische Bewehrungseinlage des Schlauchendes auftreffen und an dieser Bewehrungseinlage umgebogen werden, ergibt sich zwischen der Bewehrungseinlage und den Umfangsrippen der Fassungshülse ein vorteilhafter Formschluß, ohne die Bewehrungseinlage zu gefährden. Trotz der für die Verformung der Zahnspitzen erforderlichen, vergleichsweise niedrigen Festigkeitswerte ist eine für hohe Belastungen ausreichende Festigkeit gegeben, weil mit dem Anstauchen der Zahnspitzen eine Kaltverfestigung der Umfangsrippen im Bereich der verformten Zahnspitzen auftritt. Damit sind alle Voraussetzungen für eine sichere und dauerhafte Verbindung zwischen der Fassungshülse und dem auf den Nippel der Schlaucharmatur aufgeschobenen Schlauchende erfüllt, und zwar unabhängig davon, ob Hydraulikschläuche mit einer ein- oder zweilagigen Bewehrungseinlage oder mit einer dreilagigen Bewehrungseinlagebefestigt werden sollen, die ein geschältes Schlauchende erfordert. Wird bei einer dreilagigen Bewehrung die Überdeckung des Schlauchmantels abgeschält, so betten sich die zahnartigen Umfangsrippen unter einer entsprechenden Umlenkung in die beiden oberen Bewehrungseinlagen ein und erfahren im Bereich der Zahnspitzen eine zusätzliche Kaltverformung, die einerseits die Festigkeit der Zahnspitzen erhöht und anderseits die Formschlußfläche vergrößert, so daß auch in diesem Fall eine hervorragende zugfeste Verbindung zwischen der Fassungshülse und der Bewehrungseinlage sichergestellt wird.

In der Zeichnung ist der Erfindungsgegenstand beispielsweise dargestellt. Es zeigen
- Fig. 1: eine erfindungsgemäße Klemmvorrichtung zum Verbinden eines Hydraulik schlauches mit einer Schlaucharmatur vor dem radialen Zusammendrücken der Fassungshülse in einem schematischen Längsschnitt,
- Fig. 2: eine der Fig. 1 entsprechende Darstellung der Klemmvorrichtung, jedoch mit radial zusammengedrückter Fassungshülse,
- Fig. 3: die an einer ein- oder zweilagigen Bewehrungseinlage umgelenkten Umfangsrippen der Fassungshülse beim Klemmen eines entsprechenden Hydraulikschlauches in einem Axialschnitt in einem größeren Maßstab und
- Fig. 4: eine der Fig. 3 entsprechende Darstellung des Verlaufes der Umfangsrippen beim Klemmen eines geschälten Schlauchendes mit einer dreilagigen Bewehrungseinlage.

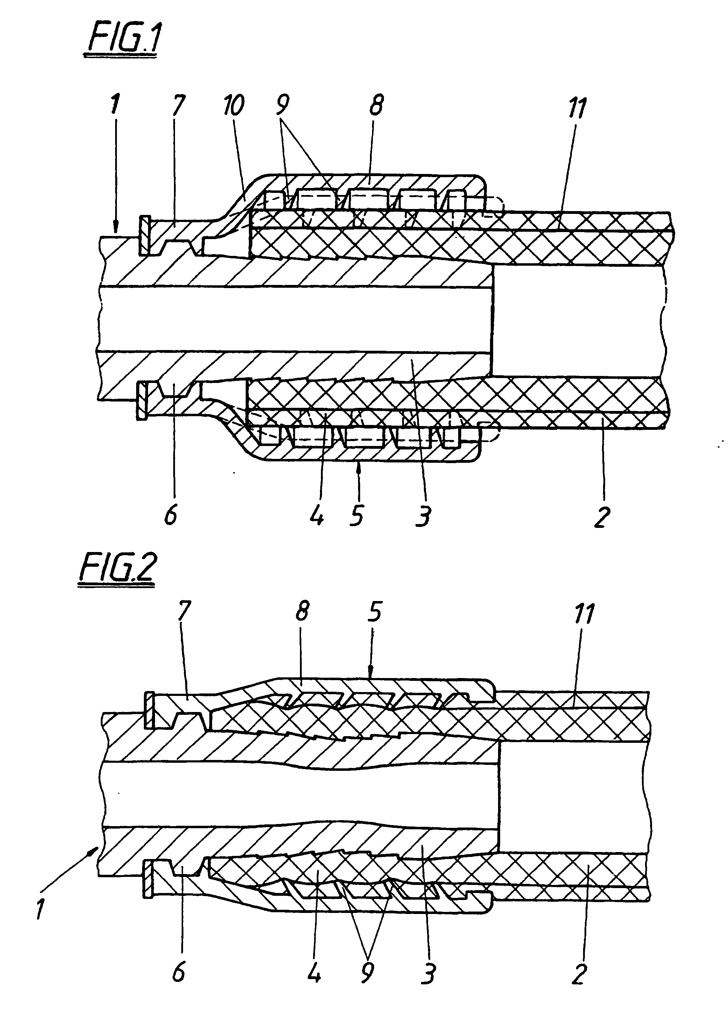

Wie die Fig. 1 und 2 erkennen lassen, bildet die nicht näher dargestellte Schlaucharmatur 1 zum Anschließen eines Hydraulikschlauches 2 in herkömmlicher Weise einen Nippel 3, auf den das anzuschließende Schlauchende 4 aufgeschoben wird. Dieser Nippel 3 trägt eine Fassungshülse 5, die zur zugfesten Verbindung mit dem Nippel 3 eine Ringschulter 6 des Nippels 3 im Bereich ihres Anschlußendes 7 übergreift. Da im allgemeinen die Fassungshülse 5 auf dem Nippel 3 vormontiert wird, ist das Schlauchende 4 in den Ringspalt zwischen dem Nippel 3 und der Fassungshülse 5 einzuführen, bevor die Fassungshülse 5 mit Hilfe von radial wirksamen, über den Umfang der Fassungshülse 5 gleichmäßig verteilten Preßbacken zusammengedrückt wird. Auf der Innenwandung der Fassungshülse 5 sind in einem zylindrischen Abschnitt 8 im Querschnitt zahnartige Umfangsrippen 9 ausgebildet, die gegen das Schlauchende 4 vorstehen und beim radialen Zusammendrücken der Fassungshülse 5 in die Außenwandung des Schlauchendes 4 eindringen.

Da sich die unverformte Fassungshülse 5 vom Anschlußende 7 gegen den zylindrischen Abschnitt 8 hin über einen Konus 10 erweitert, wird der zylindrische Abschnitt 8 beim Zusammendrücken der Fassungshülse 5 axial verlagert, wie dies in der Fig. 1 strichliert angedeutet ist. Die zahnartigen Umfangsrippen 9 dringen dabei in die Außenwandung des Hydraulikschlauches 2 ein, bis sie die üblicherweise vorhandene metallische Bewehrungseinlage 11 erreichen. Im Gegensatz zu herkömmlichen zahnartigen Umfangsrippen sind die Umfangsrippen 9 nach der Erfindung biegeweich in dem Sinne ausgebildet, daß die sich im Querschnitt ergebenden Zähne an der Bewehrungseinlage 11 umgelenkt werden, und zwar nicht nur im Spitzenbereich der Zähne, sondern über die Zahnhöhe, wie dies der Fig. 2 entnommen werden kann. Mit dem zunehmenden Zusammendrücken der Fassungshülse 5 erhöht sich ja der Eindringwiderstand für die Umfangsrippen 9 durch die Bewehrungseinlage 11, was im Zusammenwirken mit der axialen Hülsenverlagerung zu einem Umbiegen der zahnartigen Umfangsrippen 9 entgegen der axialen Hülsenvonagerung führt. Da zugleich die Bewehrungseinlage 11 einer Verformung durch die zahnartigen Umfangsrippen 9 unterworfen wird, ergibt sich eine vorteilhafte, formschlüssige Verkrallung zwischen der Bewehrungselniage 11 und den zahnartigen Umfangsrippen 9. Aufgrund des in die Lücken zwischen den zahnartigen Umfangsrippen 9 eindringenden Anteils der Außenwandung des Schlauchendes 4 werden die Umfangsrippen 9 mit sich vergrößernder Umlenkung zunehmend durch den Außenmantel abgestützt, weil sich ja das Lückenvolumen mit der zunehmenden Umlenkung der Umfangsrippen 9 verkleinert. Durch die im obigen Sinn biegeweichen Umfangsrippen 9 kann daher eine sichere Klemmhalterung des Schlauchendes 4 zwischen dem Nippel 3 und der Fassungshülse 5 erreicht werden, und zwar weitgehend unabhängig vom jeweiligen Aufbau des Hydraulikschlauches 2. Der Erweiterungskonus 10 erlaubt ein radiales Zusammendrücken des zylindrischen Abschnittes 8 der Fassungshülse 5 in einem vergleichsweise weiten Bereich, so daß die Klemmvorrichtung die üblichen Durchmesserunterschiede der verschiedenen Hydraulikschläuche ausgleichen kann, zumal die Umlenkung der zahnartigen Umfangsrippen 9 erst eingeleitet wird, wenn die Zahnspitzen die Bewehrungseinlage 11 erreichen.

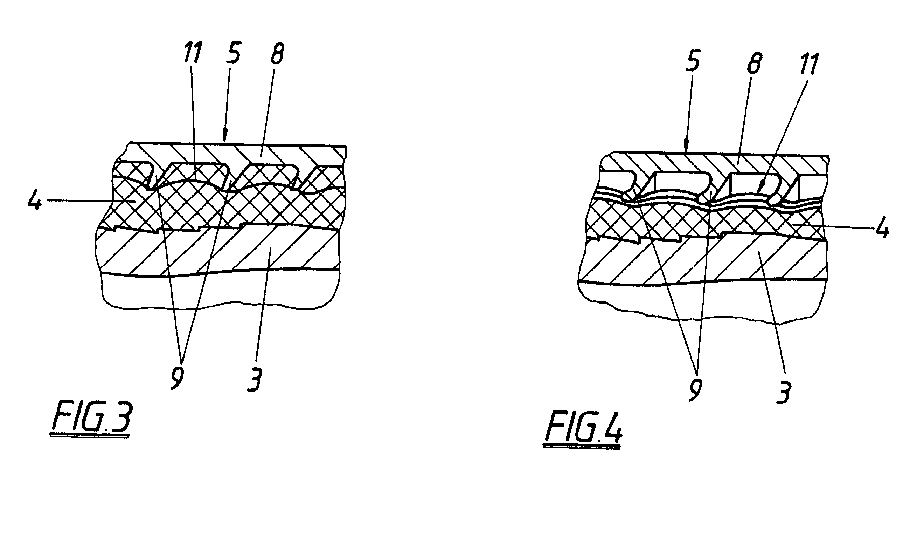

In den Fig. 3 und 4 sind unterschiedliche Einsatzmöglichkeiten veranschaulicht. Während nach der Fig. 3 ein Hydraulikschlauch mit einer ein- oder zweilagigen Bewehrungseinlage 11 dargestellt ist, zeigt die Fig. 4 die Klemmung eines Hydraulikschlauches mit einer dreilagigen Bewehrungseinlage 11. Bei einer solchen dreilagigen Bewehrungseinlage 11 wird das anzuklemmende Schlauchende 4 im allgemeinen geschält, so daß die Bewehrung 11 zumindest teilweise freigelegt ist. Während gemäß der Fig. 3 die Umfangsrippen 9 zunächst die Außenwandung des Schlauchendes 4 bis zu der Bewehrungseinlage 11 durchdringen müssen, bevor der angestrebte Formschluß zwischen den zahnartigen Umfangsrippen 9 und der Bewehrungseinlage 11 unter einem Umbiegen der zahnartigen Umfangsrippen 9 eintritt, werden nach der Fig. 4 die Spitzen der im Querschnitt zahnförmigen Umfangsrippen 9 beim Anpressen an die mehrlagige Bewehrungseinlage 11 unter einer Kaltverfestigung angestaucht und umgelenkt, was ebenfalls zu einem entsprechenden Formschluß zwischen den Umfangsrippen 9 und der Bewehrungseinlage 11 führt. Da die Drahtgeflechte der Bewehrungseinlage 11 zum Teil in die weicheren Zahnspitzen eindringen, ergibt sich trotz des Fehlens einer entsprechenden Überdeckung der Bewehrungseinlage 11 eine vorteilhafte Verkrallung zwischen der Fassungshülse 5 und dem Schlauchende 4.

## Patentansprüche

1. Klemmvorrichtung zum Verbinden eines Hydraullkschlauches (2) mit einer Schlaucharmatur (1) bestehend aus einem der Schlaucharmatur (1) zugehörigen Nippel (3) und aus einer eine Ringschulter (6) des Nippels (3) mit einem Anschlußende (7) übergreifenden Fassungshülse (5), im Bereich eines zylindrischen Abschnittes (8) auf ihrer Innenwandung mit axialem Abstand voneinander angeordnete, im Querschnitt zahnartige Umfangsrippen (9) aufweist und sich zumindest vor ihrer plastischen Verformung zwischen dem Anschlußende (7) und dem zylindrischen Abschnitt (8) gegen diesen Abschnitt (8) hin konisch erweitert, wobei das auf den Nippel (3) aufgeschobene Schlauchende zwischen dem Nippel (3) und der unter einer plastischen Verformung radial zusammengedrückten Fassungshülse (5) festklemmbar ist, während die Umfangsrippen (9), die im Sinne einer Auslenkung der sich im Querschnitt ergebenden Zähne an einer im Hydraulikschlauch (2) vorgesehenen, metallischen Bewehrungseinlage (11) biegeweich ausgebildet sind, in die Außenwandung des Hydraulikschlauches (2) formschlüssig eingreifen, **dadurch gekennzeichnet, daß** die Spitzen der im Querschnitt zahnförmigen Umfangsrippen (9) an der Bewehrungseinlage (11) unter einer Kaltverfestigung anstauchbar sind.

## Claims

1. Clamping device for connecting a hydraulic hose (2) to a hose fitting (1), comprising a nipple (3) belonging to the hose fitting (1) and a socket sleeve (5) engaging over an annular shoulder (6) of the nipple (3) with a connecting end, said socket sleeve (5) comprising axially spaced peripheral ribs (9) with a tooth-like cross-section in the region of a cylindrical section (8) on its inner wall and, at least prior to its plastic deformation, widening conically between the connecting end (7) and the cylindrical section (8) towards said section (8) wherein the end (4) of the hose pushed onto the nipple (3) can be securely clamped between the nipple (3) and the socket sleeve (5) which is radially compressed with plastic deformation while the peripheral ribs (9) which are formed so that they can be bent in the sense of a deflection of the teeth resulting in cross-section on a metal reinforcement insert (11) provided in the hydraulic hose (2) engage in a shape-locking way into the outer wall of the hydraulic hose (2), **characterised in that** the tips of the peripheral ribs (9) which are tooth-like in cross-section can be headed on a reinforcement insert (11) with cold-working.

## Revendications

1. Dispositif de serrage pour relier un tuyau hydraulique (2) à un embout de tuyau (1), formé d'un raccord (3) appartenant à l'embout (1) et d'une douille de monture (5) entourant un épaulement annulaire (6) du raccord (3) par une extrémité de raccordement (7), douille de monture présentant, dans la zone d'un tronçon cylindrique (8), sur sa paroi intérieure, des nervures périphériques (9) à section transversale du genre de dents, disposées à distance axiale les unes des autres, et la douille, au moins avant sa déformation plastique, allant en s'élargissant de façon conique entre l'extrémité de raccordement (7) et le tronçon cylindrique (8), en évoluant vers ce tronçon (8), sachant que l'extrémité de tuyau (4), enfilée sur le raccord (3), est susceptible d'être bloquée par serrage entre le raccord (3) et la douille de monture (5) comprimée radialement sous l'effet d'une déformation plastique, tandis que les nervures périphériques (9), réalisées avec une souplesse en flexion, au sens d'une déformation de la section transversale des dents, se plaquant sur un insert d'armature (11) métallique, prévu dans le tuyau hydraulique (2), s'engagent, par une liaison de forme, dans la paroi extérieure du tuyau hydraulique (2), **caractérisé en ce que** les pointes des nervures périphériques (9) à section transversale en forme de dent sont susceptibles d'être écrasées sur l'insert d'armature (11) sous l'effet d'une consolidation à froid.
